# EUROPEAN PATENT APPLICATION

(11) **EP 2 589 518 A1**
(43) Date of publication of application: **08.05.2013**
(21) Application number: 11008754.1
(22) Date of filing: 03.11.2011
(51) Int. Cl.: B60R 25/04

(54) **Power supply management apparatus and burglarproof power supply system that uses the power supply management apparatus**

(71) Applicant: Lin, Chin-Tsung, Xizhi Dist New Taipei City 221 (TW)
(72) Inventor: Lin, Chin-Tsung, Xizhi Dist New Taipei City 221 (TW)
(74) Representative: Manitz, Finsterwald & Partner GbR

(57) **Abstract**

A power supply management apparatus (1) and a burglarproof power supply system that uses the power supply management apparatus. The power supply management apparatus manages power supplied to an electronic apparatus, such as a vehicle, a solar apparatus, a mobile communication apparatus or a notebook computer that need power to operate. The power supply management apparatus includes a battery (11), a management module (12), a power outputting port (13) and an operation module (14). A user is allowed to command the management module, by using the operation module, to generate management power that is output to the electronic apparatus. If the output management power does not satisfy the requirements for actuating the electronic apparatus, the actuation of the electronic apparatus is restricted under an inoperable condition. Therefore, a burglarproof effect is achieved, a risk that the electronic apparatus is stolen is greatly reduced, and a standby time of the electronic apparatus is increased.

## Description

### BACKGROUND OF THE INVENTION

### 1. Field of the Invention

This invention relates to power supply management apparatuses and burglarproof power supply systems that use the power supply management apparatuses, and, more particularly, to a power supply management apparatus that manages power supplied to an electronic apparatus and a burglarproof power supply systems that uses the power supply management apparatus.

### 2. Description of Related Art

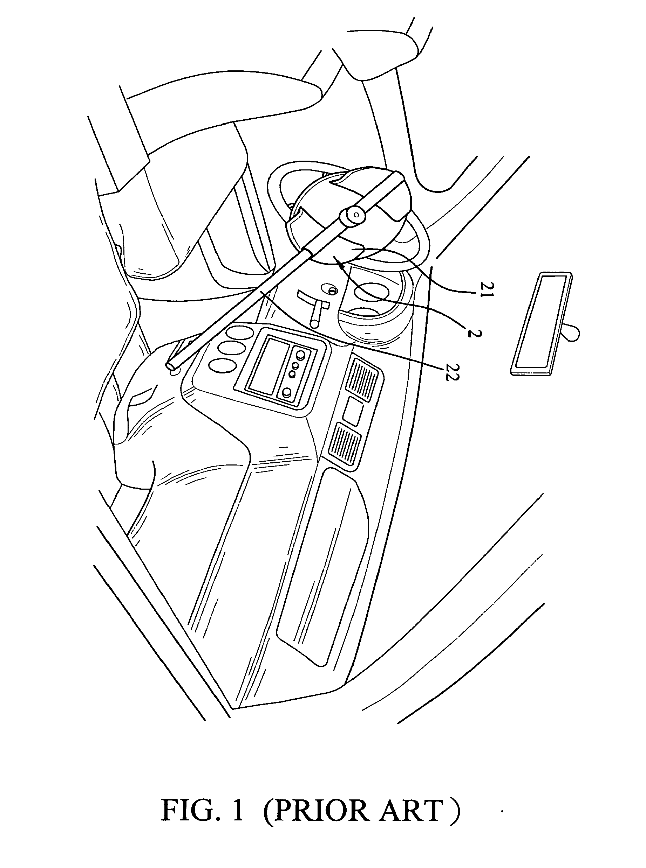

Cars are indispensable for modem people. Car owners may install a burglarproof apparatus in their cars to protect them from stolen. As shown in FIG 1, a conventional steering wheel lock 2 includes a wheel body 21 and a locking pole 22. The wheel body 21 is disposed on a steering wheel, and the locking pole 22 is locked to the steering wheel by passing itself through the wheel body 21, so as to restrict the rotation of the steering wheel. Therefore, a burglar cannot drive the car. In general, the steering wheel lock 2 is bulky and made of a strong metal material that is not easily cut by a saw. However, the steering wheel lock 2, when not in use, occupies a large room in the car.

Accordingly, a gear lock that restricts the changing of the gears comes to the market. However, a burglar may easily unlock the gear lock and steal the car if he has specific unlocking tools.

Therefore, how to solve the above problems of the prior art is becoming one of the popular issues in the art.

### SUMMARY OF THE INVENTION

In view of the above-mentioned problems of the prior art, it is a primary objective of the present invention to provide a power supply management apparatus and a burglarproof power supply system that uses the power supply management apparatus, to solve the problems of using the conventional locking apparatuses.

To achieve the above objective and other objectives, the present invention provides a power supply management apparatus for managing power supplied to an electronic apparatus, including: a battery for supplying power; a management module connected to the battery for receiving and processing the power supplied by the battery and generating management power; a power outputting port connected to the management module for outputting the management power generated by the management module to supply power to the electronic apparatus; and an operation module connected to the management module for inputting operation signals, allowing the management module to receive the operation signals and generate the management power according to the operation signals.

In an embodiment of the present invention, the management module further comprises an inputting unit that is a wired or wireless signal receiver connected to the operation module for receiving the operation signals; the management module further includes: an identification unit for determining whether the management module is allowed to generate the management power according to the operation signals received by the management module; a display unit for displaying residual power of the battery and a level of power supplied to the electronic apparatus; and a protection unit for preventing an outputting of the battery from exceeding a safety range; the operation signals are identity identification signals, ascending signals or descending signals; and the battery is a lead acid battery, a lithium battery, an iron lithium battery or a lithium iron phosphate battery.

The present invention further provides a burglarproof power supply system that uses the above power supply management apparatus, wherein the electronic apparatus is a vehicle, a solar apparatus, a mobile communication apparatus or a notebook computer.

The present invention further provides a power supply management apparatus for managing power supplied to an electronic apparatus, including: a power module having a battery that supplies power; a management module installed in the power module and connected to the battery for receiving and processing the power supplied by the battery and generating management power; a power outputting unit connected to the management module and exposed from the power module for outputting the management power generated by the management module to supply power to the electronic apparatus; and an operation module connected via the power module to the management module for inputting operation signals, allowing the management module to receive the operation signals and generate the management power according to the received operation signals.

In another embodiment of the present invention, the management module further comprises an inputting unit that is a wired or wireless signal receiver connected to the operation module for receiving the operation signals; the management module further includes: an identification unit for determining whether the management module is allowed to generate the management power according to the operation signals received by the management module; a display unit for displaying residual power of the battery and a level of power supplied to the electronic apparatus; and a protection unit for preventing an outputting of the battery from exceeding a safety range; the operation signals are identity identification signals, ascending signals or descending signals; and the battery is a lead acid battery, a lithium battery, an iron lithium battery or a lithium iron phosphate battery.

The present invention yet provides a burglarproof power supply system that uses the above power supply management apparatus, wherein the electronic apparatus is a vehicle, a solar apparatus, a mobile communication apparatus or a notebook computer.

In sum, the power supply management apparatus manages power supplied to an electronic apparatus that is a vehicle, a solar apparatus, a mobile communication apparatus or a notebook computer that need power to operate, and includes a battery, a management module, a power outputting port and an operation module. A user is allowed to command the management module, by using the operation module, to generate management power that is output to the electronic apparatus. If the output management power does not satisfy the requirements for actuating the electronic apparatus, the actuation of the electronic apparatus is restricted under an inoperable condition. Therefore, a burglarproof effect is achieved, a risk that the electronic apparatus is stolen is greatly reduced, and a standby time of the electronic apparatus is increased.

### BRIEF DESCRIPTION OF DRAWINGS

The invention can be more fully understood by reading the following detailed description of the preferred embodiments, with reference made to the accompanying drawings, wherein:
FIG 1 is a schematic diagram of a steering wheel lock according to the prior art;
FIG 2 is a functional block diagram of a power supply management apparatus of a first embodiment according to the present invention; and
FIG 3 is a functional block diagram of a power supply management apparatus of a second embodiment according to the present invention.

### DETAILED DESCRIPTION OF THE INVENTION

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

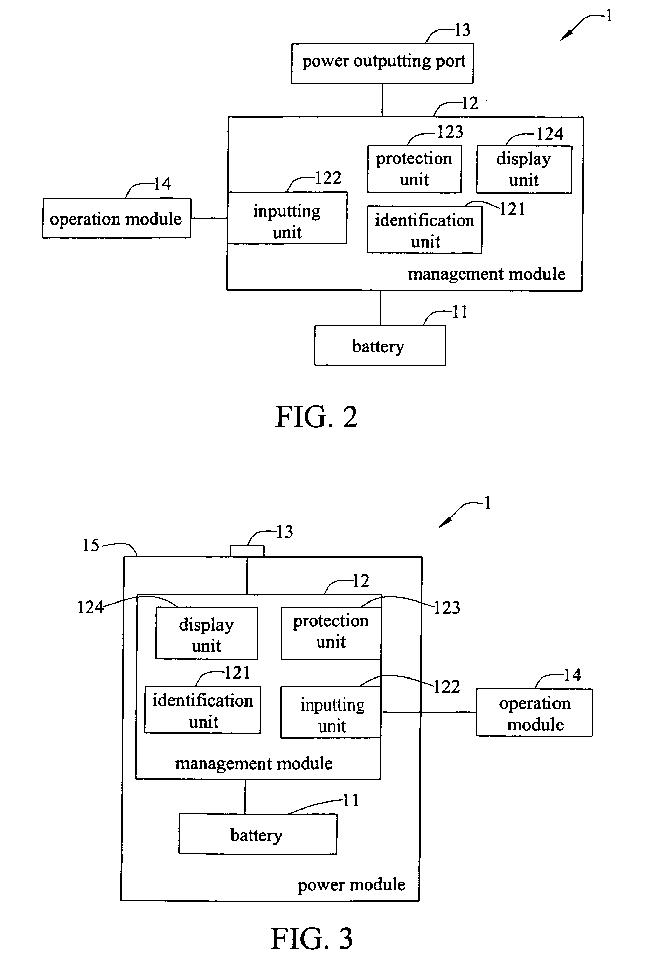

Referring to FIG 2, a functional block diagram of a power supply management apparatus 1 of a first embodiment according to the present invention is shown. The power supply management apparatus 1 manages power supplied to an electronic apparatus or is in a burglarproof application. The power supply management apparatus 1 is applied to a vehicle, a solar apparatus, a mobile communication apparatus or a notebook computer of a burglarproof power supply system that need power to operate. The power supply management apparatus 1 manages power supplied to the electronic apparatus and controls the actuation of the electronic apparatus. When used in the mobile communication apparatus or the notebook computer, the power supply management apparatus 1 prevents data from breached and power from unnecessarily consumed. Therefore, the power supply management apparatus 1 is eco-friendly.

The power supply management apparatus 1 comprises a battery 11, a management module 12, a power outputting port 13 and an operation module 14. The battery 11 supplies power, and is a lead acid battery, a lithium battery, an iron lithium battery, or a lithium iron phosphate battery, or any other elements that may store power, and may be selected on demands.

The management module 12 is a printed circuit board having a chip disposed thereon, and is connected to the battery 11 for receiving and processing the power supplied by the battery 11 and generating management power. The power outputting port 13 is a conductive terminal having positive or negative polarity. The power outputting port 13 is connected to the management module 12 for outputting the management power generated by the management module 12 for supplying power to the vehicle. The vehicle may be a car, a motorcycle, an electric car, etc.

The operation module 14 is connected to the management module 12 for allowing a user to input he operation signals, allowing the management module 12 to receive the operation signals and generate the management power according to the operation signals so as to supply power to the vehicle. That is, the output power of the power outputting port 13 may be decided by a user. The operation module 14 is a panel or a keyboard for inputting signals to be input thereto, allowing a user to input the operation signals.

The management module 12 is connected to the battery 11 and the power outputting port 13, and has an inputting unit 122 connected to the operation module 14, for receiving the operation signals input by a user. Accordingly, the management module 12 generates the management power according to the operation signals received by the inputting unit 122, and adjusts current/voltage outputting values of the battery 11 dynamically according to the user's demands.

The management module 12 further comprises an identification unit 121 for identifying whether a user has the privilege to command the management module 12 to generate the management power to supply power to the vehicle according to the operation signals received by the management module 12. The operation signals input by the operation module 14 may be identity identification signals, ascending signals or descending signals, wherein the identity identification signals identity whether a user has the privilege to command the management module 12 to generate the management power to supply power to the vehicle. The management module 12 will not accept the user's commands and generate the management power if the user does not have the privilege. If the user has the privilege, the ascending signals command the management module 12 to generate management power that satisfy the requirements for actuating the vehicle. If the user has the privilege, the descending signals command the management module 12 to generate management power that does not satisfy the requirements for actuating the vehicle such that the vehicle cannot be actuated. Therefore, the vehicle is protected from burglars even without any locking apparatus installed, and a risk that the vehicle is stolen is greatly reduced.

The inputting unit 122 is a wired or wireless signal receiver, allowing the operation module 14 to transmit the operation signals input by the user to the management module 12 in a wired or wireless manner. Therefore, the power supply management apparatus 1 may be installed in a variety of vehicles and meet various users' operation demands.

In the first embodiment, the management module 12 further has a display unit 124. The display unit 124 displays residual power of the battery 11 and a level of power supplied to the vehicle. The display unit 124 may be connected to a control panel of the vehicle, and the control panel controls the display unit 124 to display the residual power or the level of power.

The management module 12 further has a protection unit 123 that restricts the outputting of the battery 11 from exceeding a safety range. Therefore, the battery 11 is prevented from overly discharging and being damaged.

Referring to FIG 3, a power supply management apparatus 1 of a second embodiment according to the present invention is shown.

Components of the power supply management apparatus 1 shown in FIG 3 that correspond to those shown in FIG 2 are numbered identically for clarity and simplicity

The power supply management apparatus 1 comprises a power module 15, the management module 12, the power outputting port 13, and the operation module 14. The power module 15 has the battery 11 that supplies power. The management module 12 is installed in the power module 15 and connected to the battery 11 for receiving and processing the power supplied by the battery 11 and generating management power. The power outputting port 13 is connected to the management module 12 and exposed from the power module 15 for outputting the management power generated by the management module 12 and supplying power to the vehicle. Since the management module 12 is installed in the power module 15, the management module 12 does not need to be additionally installed in the vehicle. Therefore, the assembly difficulty of the power supply management apparatus 1 is greatly reduced.

The operation module 14 is used for a user to input the operation signals. The operation module 14 is connected via the power module 15 to the management module 12, allowing the management module 12 to receive the operation signals, and generate the management power to supply power to the vehicle according to the received operation signals.

In sum, the power supply management apparatus manages power supplied to an electronic apparatus that is a vehicle, a solar apparatus, a mobile communication apparatus or a notebook computer that need power to operate, and includes a battery, a management module, a power outputting port and an operation module. A user is allowed to command the management module, by using the operation module, to generate management power that is output to the electronic apparatus. If the output management power does not satisfy the requirements for actuating the electronic apparatus, the actuation of the electronic apparatus is restricted under an inoperable condition. Therefore, a burglarproof effect is achieved, a risk that the electronic apparatus is stolen is greatly reduced, and a standby time of the electronic apparatus is increased.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. A power supply management apparatus for managing power supplied to an electronic apparatus, comprising:
a battery for supplying power;
a management module connected to the battery for receiving and processing the power supplied by the battery and generating management power;
a power outputting port connected to the management module for outputting the management power generated by the management module to supply power to the electronic apparatus; and
an operation module connected to the management module for inputting operation signals, allowing the management module to receive the operation signals and generate the management power according to the operation signals.

2. The power supply management apparatus of claim 1, wherein the management module further comprises an inputting unit that is a wired or wireless signal receiver connected to the operation module for receiving the operation signals.

3. The power supply management apparatus of claim 1, wherein the management module further comprises:
an identification unit for determining whether the management module is allowed to generate the management power according to the operation signals received by the management module;
a display unit for displaying residual power of the battery and a level of power supplied to the electronic apparatus; and
a protection unit for preventing an outputting of the battery from exceeding a safety range.

4. The power supply management apparatus of claim 1, wherein the battery is a lead acid battery, a lithium battery, an iron lithium battery or a lithium iron phosphate battery.

5. A burglarproof power supply system that uses the power supply management apparatus of claim 1, wherein the electronic apparatus is a vehicle, a solar apparatus, a mobile communication apparatus or a notebook computer.

6. A power supply management apparatus for managing power supplied to an electronic apparatus, comprising:
a power module having a battery that supplies power;
a management module installed in the power module and connected to the battery for receiving and processing the power supplied by the battery and generating management power;
a power outputting unit connected to the management module and exposed from the power module for outputting the management power generated by the management module to supply power to the electronic apparatus; and
an operation module connected via the power module to the management module for inputting operation signals, allowing the management module to receive the operation signals and generate the management power according to the received operation signals.

7. The power supply management apparatus of claim 6, wherein the management module further comprising an inputting unit that is a wired or wireless signal receiver connected to the operation module for receiving the operation signals.

8. The power supply management apparatus of claim 6, wherein the management module further comprises:
an identification unit for determining whether the management module is allowed to generate the management power according to the operation signals received by the management module;
a display unit for displaying residual power of the battery and a level of power supplied to the electronic apparatus; and
protection unit for preventing an outputting of the battery from exceeding a safety range.

9. The power supply management apparatus of claim 6, wherein the battery is a lead acid battery, a lithium battery, an iron lithium battery or a lithium iron phosphate battery.

10. A burglarproof power supply system that uses the power supply management apparatus of claim 6, wherein the electronic apparatus is a vehicle, a solar apparatus, a mobile communication apparatus or a notebook computer.
